# EUROPÄISCHE PATENTSCHRIFT

(11) **EP 3 749 903 B1**
(45) Veröffentlichungstag und Bekanntmachung des Hinweises auf die Patenterteilung: **13.04.2022**
(21) Anmeldenummer: 18830476.0
(22) Anmeldetag: 20.12.2018
(51) Int. Cl.: F25B 19/00, F25B 25/00, F25D 3/10, H02G 15/34

(54) **VERFAHREN UND VORRICHTUNG ZUM KÜHLEN EINES SUPRALEITENDEN STROMTRÄGERS**
METHOD AND DEVICE FOR COOLING A SUPERCONDUCTING CURRENT CARRIER
PROCÉDÉ ET DISPOSITIF DE REFROIDISSEMENT D'UN PORTEUR DE COURANT SUPRACONDUCTEUR

(30) Priorität: 08.02.2018 DE 102018001040
(43) Veröffentlichungstag der Anmeldung: 16.12.2020
(73) Patentinhaber: Messer SE & Co. KGaA, 65812 Bad Soden (DE); Messer Industriegase GmbH, 65812 Bad Soden (DE)
(72) Erfinder: HERZOG, Friedhelm, 47803 Krefeld (DE); KUTZ, Thomas, 41379 Brüggen-Born (DE)
(74) Vertreter: Münzel, Joachim R.
(86) Internationale Anmeldenummer: PCT/EP2018/086290
(87) Internationale Veröffentlichungsnummer: WO 2019/154552

(56) Entgegenhaltungen:
- US-A1- 2014 150 471

## Beschreibung

Die Erfindung betrifft ein Verfahren zum Kühlen eines in einem Kryostaten aufgenommenen, mit zwei normalleitenden Stromzuführungen elektrisch verbundenen supraleitenden Stromträgers, bei dem ein Kühlmedium aus einem Vorratsbehälter auf eine Temperatur unterhalb seiner Siedetemperatur unterkühlt und über einen Kühlmediumseingang dem Kryostaten zugeführt, mit dem supraleitenden Stromträger in thermischen Kontakt gebracht und anschließend über einen Kühlmediumsausgang des Kryostaten abgeführt wird.

Als supraleitende Stromträger sollen im folgenden zum elektrischen Stromtransport bestimmte Bauelemente bezeichnet werden; insbesondere handelt es sich dabei um supraleitende Kabel oder supraleitende Stromschienen. Derartige supraleitende Stromträger müssen, wie alle auf Basis supraleitender Bauelemente arbeitende Einrichtungen, auf eine Betriebstemperatur gekühlt werden, die unterhalb der supraleitenden Übergangstemperatur (Sprungtemperatur) des verwendeten Supraleiters liegt. Sprungtemperaturen von Supraleitern variieren in einem weiten Bereich und reichen von T_{c} < 10 K bei klassischen metallischen Supraleitern bis zu Werten von T_{c} >100 K bei keramischen Hochtemperatursupraleitern, wie beispielsweise Bi₂Sr₂CaₙCuₙ₊₁O₂ₙ₊₆. Zur Kühlung werden nach dem Stand der Technik unterkühlte verflüssigte Gase, beispielsweise tiefkalt verflüssigter Stickstoff, flüssige Luft oder ein verflüssigtes Edelgas, insbesondere flüssiges Helium, als Wärmeübertragungsmittel eingesetzt. Als "unterkühltes verflüssigtes Gas" wird hier ein Gas verstanden, das auf einer Temperatur unterhalb der Siedetemperatur beim jeweils herrschenden Druck vorliegt. Im Gegensatz zur Verwendung eines nicht- unterkühlten, also bei der entsprechenden Siedetemperatur vorliegenden, verflüssigten Gases bewirkt dabei die Aufnahme von Wärme zunächst nur eine Temperaturerhöhung des verflüssigten Gases, ohne dass eine Änderung des Aggregatzustandes eintritt.

Beispiele für solche Kühlsysteme werden in den Druckschriften US 6 732 536 B1, WO 2007/005091 A1, EP 1 850 354 A1 und US 2006/0150639 A1 beschrieben. Bei all diesen Systemen wird das verflüssigte Gas unterkühlt und mittels einer Pumpe dem Objekt (supraleitender Stromträger) zugeführt. Nach dem Wärmetausch mit dem Objekt wird das Kühlmedium mittels eines Unterkühlers erneut abgekühlt, um die beim Wärmekontakt mit dem Objekt aufgenommene Wärme abzuführen, und steht anschließend wieder zur erneuten Kühlung des Objekts zur Verfügung. Als Unterkühler kommt beispielsweise eine Kältemaschine zum Einsatz, oder, wie bei den Gegenständen der der EP 1 850 354 A1 und der US 6 732 536 B1, ein Wärmeaustauscher, in welchem auf der wärmeabführenden Seite ein Kühlmedium bei einer Temperatur verdampft, die unterhalb der Kühltemperatur des zu kühlenden Objektes liegt. Beispielsweise wird das gleiche Kühlmedium wie im Kältekreislauf bei einem Druck verdampft, der geringer als der Systemdruck im Kältekreislauf ist, und mit dem bei höherem Druck vorliegenden Kühlmedium in Wärmekontakt gebracht. Dadurch wird das bei höherem Druck vorliegende Kühlmedium unterkühlt. Durch den Einsatz von Vakuumpumpen kann der Verdampfungsdruck und damit die Verdampfungstemperatur des zur Unterkühlung eingesetzten Mediums noch weiter abgesenkt werden. Die Wahl des Kühlmediums hängt von der Betriebstemperatur des zu kühlenden Objekts ab; bei Systemen, die auf der Basis von Hochtemperatursupraleitern arbeiten, kommt häufig flüssiger Stickstoff als Kühlmedium zum Einsatz.

Die bekannten Systeme weisen Nachteile auf, die insbesondere bei langen Kühlstrecken, insbesondere bei der Kühlung von langen supraleitenden Kabeln oder Stromschienen, zum Tragen kommen. Da das Kühlmedium im Kreislauf geführt wird, durchläuft nach dem Stande der Technik das Kühlmedium entweder den supraleitenden Stromträger sowohl auf dem Hin- als auch Rückweg, oder das Kühlmedium wird über eine parallel zum Stromträger führende Rückleitung zum Kühlmediumstank bzw. zur Saugseite der Pumpe zurückgeführt. Im ersten Fall verkompliziert das Vorsehen von zwei Strömungswegen den Aufbau des supraleitenden Stromträgers und der über die doppelte Länge des Kühlweges auftretende Druckverlust muss mit entsprechend aufwändig ausgelegten Pump- und Druckleitungssystemen kompensiert werden. Im zweiten Falle ist der Bau einer aufwändigen, wärmeisolierten Rückleitung erforderlich. Insbesondere bei supraleitenden Kabeln oder Stromschienen stellt sich das zusätzliche Problem, dass die zu kühlenden Objekte eine Länge von einigen Hundert Metern bis zu einigen Kilometern haben, wobei in Zukunft die Entwicklung von noch erheblich längeren Stromträgern zu erwarten ist. Um auftretende Verluste möglichst gering zu halten, wird der Stromträger daher in strömungstechnisch voneinander getrennte Kühlsegmente unterteilt, für die jeweils ein eigenes Kreislauf- Kühlsystem zum Einsatz kommt. Dies ist jedoch mit einem hohen apparatetechnischen Aufwand verknüpft.

Um Strom durch einen supraleitenden Stromträger führen zu können, ist der supraleitende Stromträger an beiden Enden mit normalleitenden Stromzuführungen elektrisch verbunden, die die Zuführung des Stroms von einem Erzeuger und die Weiterleitung an einen Verbraucher vermitteln. Da im Betrieb durch die Stromzuführungen und den supraleitenden Stromträger hohe Ströme von beispielsweise bis zu 200 000 A geführt werden, die in den normalleitenden Stromzuführungen zu einer beträchtlichen Wärmeentwicklung führen, und gleichzeitig der supraleitende Stromträger im Betrieb stets auf einer Temperatur unterhalb seiner Sprungtemperatur gehalten werden muss, ist eine Kühlung der Stromzuführungen insbesondere im Übergangsbereich zum supraleitenden Stromträger unabdingbar. Derzeit erfolgt die Kühlung der Stromzuführungen mit konventionellen Kühlaggregaten, die allerdings technisch aufwändig sind und ihrerseits einen hohen Stromverbrauch aufweisen.

Aufgabe der vorliegenden Erfindung ist demnach, eine Möglichkeit zum Kühlen von supraleitenden Stromträgern anzugeben, die bei ähnlicher Leistungsfähigkeit mit einem geringeren apparatetechnischen Aufwand als nach dem Stand der Technik bekannte Systeme auskommt.

Gelöst ist diese Aufgabe durch ein Verfahren mit den Merkmalen des Patentanspruchs 1 sowie durch eine Vorrichtung mit den Merkmalen des Patentanspruchs 9. Vorteilhafte Ausgestaltungen ergeben sich aus den Merkmalskombinationen der Unteransprüche.

Erfindungsgemäß ist also ein Verfahren der eingangs genannten Art und Zweckbestimmung dadurch gekennzeichnet, dass das Kühlmedium nach dem Durchlaufen des Kryostaten mit wenigstens einer ersten der normalleitenden Stromzuführungen in Wärmekontakt gebracht wird.

Beim erfindungsgemäßen Verfahren wird also der Kälteinhalt des Kühlmediums mehrfach genutzt: Zum einen dazu, den supraleitenden Stromträger auf einen Wert unterhalb seiner Sprungtemperatur zu halten und zum andern zur Kühlung der normalleitenden Stromzuführung. Da der supraleitende Stromträger im Betrieb keine Wärme erzeugt, erfolgt nur ein geringfügiger Wärmeeintrag über die Isolierung des Kryostaten. Daher wird das Kühlmedium stromauf zum Kryostaten bevorzugt so weit unterkühlt, dass es noch als verflüssigtes Gas vorliegt, wenn es den Kryostaten verlässt und der normalleitenden Stromzuführung zugeführt wird.

Das als Kühlmedium eingesetzte verflüssigte Gas wird vor seinem Wärmekontakt mit dem Objekt unterkühlt, also auf eine Temperatur unterhalb seines Siedepunktes gebracht. Dazu ist die Kühlmediumsleitung mit einer Einrichtung zum Unterkühlen des durch die Kühlmediumsleitung geführten Kühlmediums ausgerüstet. Dadurch wird gewährleistet, dass das Kühlmedium vor dem Wärmekontakt mit dem supraleitenden Stromträger stets als unterkühltes verflüssigtes Gas vorliegt. Zum Unterkühlen des Kühlmediums kommt beispielsweise eine Apparatur zum Einsatz, bei der ein verflüssigtes, bei einem gegebenen Druck vorliegendes kryogenes Kühlmedium, beispielsweise flüssiger Stickstoff, mit dem gleichen Kühlmedium in Wärmekontakt gebracht wird, das gleichfalls im verflüssigten Zustand, jedoch bei einem niedrigeren Druck vorliegt. Da die Siedetemperatur mit abnehmendem Druck sinkt, wird das bei höherem Druck vorliegende Kühlmedium beim Wärmekontakt auf eine Temperatur unterhalb seiner Siedetemperatur abgekühlt. Auf diese Weise kann das kryogene Kühlmedium auf eine Temperatur abgekühlt werden, die beispielsweise 5 bis 10K oder noch weiter unterhalb seines Siedepunkts liegt. Alternativ kann jedoch auch eine Kältemaschine oder ein Wärmetauscher zum Einsatz kommen, der einen thermischen Kontakt mit einem weiteren, noch kälteren Medium herstellt.

Falls der Kälteinhalt des durch den Kryostaten geführten Kühlmediums nicht zur Kühlung der Stromzuführung ausreicht, sieht eine Ausgestaltung der Erfindung vor, dass diesem aus dem Vorratsbehälter oder einem weiteren Vorratsbehälter zusätzliches Kühlmedium stromab zum Kryostaten zugeführt wird und zur Kühlung der Stromzuführung eingesetzt wird.

Eine besonders vorteilhafte Ausgestaltung der Erfindung sieht vor, dass zur Kühlung der zweiten Stromzuführung Kühlmedium aus dem Vorratsbehälter eingesetzt wird. Die zweite Stromzuführung kann auch durch Kühlmedium aus dem Kryostaten gekühlt werden, was eine bevorzugte Ausgestaltung insbesondere bei kurzen Stromträgeranordnungen ist. Insbesondere bei längeren Stromträgern empfiehlt es sich jedoch, die zweite Stromzuführung mit einer separaten Kühlmediumsleitung an den Vorratsbehälter anzuschließen, um den apparatetechnischen Aufwand zu begrenzen.

Die Unterkühlung des Kühlmediums erfolgt bevorzugt in der Weise, dass Kühlmedium aus dem Vorratsbehälter in einem Behälter mit einem Kühlmedium in indirekten Wärmekontakt gebracht wird, das bei einem geringerem Druck als dem Druck im Vorratsbehälter vorliegt. Das aus dem Behälter abdampfende oder mittels einer Vakuumpumpe entnommene Gas besitzt noch einen erheblichen Kälteinhalt und kann ebenfalls vorteilhaft zur Kühlung einer Stromzuführung oder beider Stromzuführungen eingesetzt werden.

Eine alternative Möglichkeit zum Unterkühlen des Kühlmediums sieht vor, dass dem Vorratsbehälter kontinuierlich oder in regelmäßigen Abständen kondensiertes Kühlmedium zugeführt wird, dessen Druck unmittelbar vor der Befüllung des Vorratsbehälter niedriger als der - durch den Tankdruck sowie durch den hydrostatischen Druck des im Vorratsbehälter bereits vorliegenden Kühlmedium bestimmten - Druck am Boden des Vorratsbehälters ist. Das am Boden des Vorratsbehälters abgezogene und zur Kühlung der Stromzuführungen eingesetzte Kühlmedium liegt dadurch bei einer Temperatur deutlich unterhalb des Siedepunkts bei dem Druck am Boden des Vorratsbehälters vor.

Eine wieder andere Möglichkeit zur Unterkühlung des Kühlmediums ist dadurch gekennzeichnet, dass als Kühlmedium ein erstes Kühlmedium und zum Unterkühlen des ersten Kühlmediums ein mit diesem an einem Wärmetauscher in direktem oder indirektem Wärmekontakt stehendes zweites Kühlmedium zum Einsatz kommt, das auf einer niedrigeren Temperatur vorliegt. Beispielsweise kommt als erstes Kühlmedium flüssiger Sauerstoff und als zweites Kühlmedium flüssiger Stickstoff zum Einsatz, der aufgrund seiner niedrigeren Siedetemperatur den flüssigen Sauerstoff unterkühlt.

Bevorzugt kommt als Kühlmedium ein verflüssigtes Gas zum Einsatz, beispielsweise Flüssigstickstoff, Flüssigsauerstoff, LNG oder ein verflüssigtes Edelgas, insbesondere flüssiges Argon oder flüssiges Helium. Flüssigstickstoff ist insbesondere zum Kühlen von Apparaturen geeignet, die auf der Basis von Hochtemperatursupraleitern arbeiten, insbesondere von supraleitenden Stromträgern oder Segmenten von supraleitenden Stromträgern. Bei Verwendung von Flüssigsauerstoff kann dieser nach der Kühlung des Stromträgers einer weiteren Verwendung zugeführt werden, beispielsweise als Oxidationsmittel in einem Verbrennungsprozess.

In einer abermals vorteilhaften Ausgestaltung des erfindungsgemäßen Verfahrens wird die Menge des an den Stromzuführungen zugeführten Kältemediums in Abhängigkeit von der benötigten Kälteleistung geregelt.

Eine zur Durchführung des erfindungsgemäßen Verfahrens geeignete Vorrichtung zum Kühlen eines supraleitenden Stromträgers umfasst die Merkmale des Patentanspruchs 9. Die erfindungsgemäße Vorrichtung umfasst einen supraleitenden Stromträger, der an seinen Enden mit jeweils einer normalleitenden Stromzuführung elektrisch verbunden und in einem einen Kühlmediumseingang und einen Kühlmediumsausgang aufweisenden Kryostaten aufgenommen ist, wobei der Kühlmediumseingang über eine Zuleitung mit einem Vorratsbehälter für ein kryogenes Kühlmedium strömungsverbunden ist, welcher Zuleitung eine Einrichtung zum Unterkühlen zugeordnet ist. Beispielsweise ist eine Einrichtung zur Unterkühlung des Kühlmediums in der Zuleitung angeordnet. Die Vorrichtung ist erfindungsgemäß dadurch gekennzeichnet, dass die normalleitenden Stromzuführungen zumindest an ihren an den supraleitenden Stromträger angrenzenden Abschnitten durch Wärmetauscher geführt sind, die jeweils einen Kühlmediumseingang und einen Kühlmediumsausgang aufweisen und der Kühlmediumseingang wenigstens einer der Wärmetauscher mit dem Kühlmediumsausgang des Kryostaten strömungsverbunden ist.

Bei der erfindungsgemäßen Vorrichtung wird also ein kryogenes Kühlmedium zunächst unterkühlt und zur Kühlung des supraleitenden Stromträgers im Kryostaten und anschließend in einem Wärmetauscher zur Kühlung von mindestens einer der Stromzuführungen eingesetzt. Durch diesen Aufbau werden aufwändige elektrisch betriebene Kühlaggregate zur Kühlung der Stromzuführung vermieden oder können zumindest leistungsschwächer ausgeführt werden. Anstelle eines etwaig noch erforderlichen elektrisch betriebenen Kühlaggregats kann im Übrigen auch kryogenes Kühlmedium zum Einsatz kommen, das zusätzlich zu dem durch den Kryostaten geführten Kühlmedium zur Kühlung der Stromzuführung eingesetzt wird. Dazu mündet in eine den Kühlmediumsausgang des Kryostaten mit dem Kühlmediumseingang des Wärmetauschers der Stromzuführung verbindenden Leitung eine Zuleitung ein, aus der Kühlmedium aus dem Vorratsbehälter und/oder einem weiteren Vorratsbehälter beigemischt werden kann. Im Übrigen kann auch in dieser Zuleitung ein Unterkühler vorgesehen sein und das Kühlmedium als unterkühltes verflüssigtes Gas dem aus dem Kryostaten abgeführten beigemischt werden.

Der Unterkühler kann im Übrigen als separate Apparatur zwischen Vorratsbehälter und Stromträger angeordnet sein. Um den Eintrag von Wärme in den Unterkühler zu vermeiden ist es jedoch auch möglich, einen Abschnitt der Zuleitung mit dem Unterkühler innerhalb des Vorratsbehälters anzuordnen. Ebenso kann der Vorratsbehälter selbst als Unterkühler zum Einsatz kommen, indem das im Vorratsbehälter bevorratete Flüssiggas durch Wärmekontakt mit einem kälteren Medium in einen unterkühlten Zustand versetzt wird.

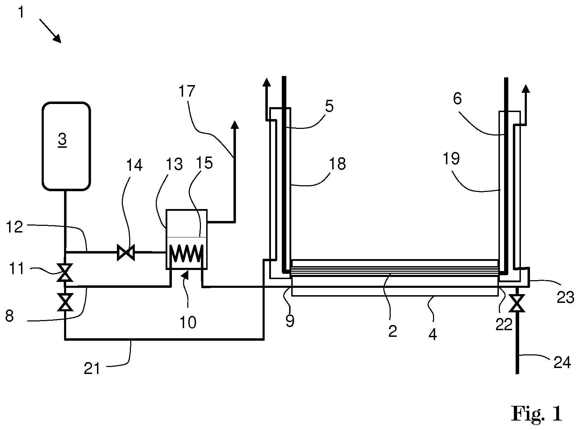

Anhand der Zeichnung soll nachfolgend ein Ausführungsbeispiel der Erfindung näher erläutert werden. Die einzige Zeichnung (Fig. 1) zeigt schematisch eine Vorrichtung zur Durchführung des erfindungsgemäßen Verfahrens.

Die in Fig. 1 gezeigte Vorrichtung 1 zum Kühlen eines supraleitenden Stromträgers 2 umfasst einen Vorratsbehälter 3 zum Speichern eines kryogenen Kühlmediums, beispielsweise einen mit thermisch gut isolierten Wänden ausgerüsteten Standtank. Beim Kühlmedium handelt es sich beispielsweise um verflüssigten Stickstoff, verflüssigten Sauerstoff oder um ein verflüssigtes Edelgas. Beim supraleitenden Stromträger 2 handelt es sich um einen Leiter, der aus einem supraleitenden Material, im Ausführungsbeispiel aus einem hochtemperatursupraleitenden Material gefertigt ist. Insbesondere handelt es sich dabei um ein supraleitendes Kabel oder um eine supraleitende Stromschiene. Um den supraleitenden Stromträger 2 während seines Einsatzes auf einer Temperatur unterhalb der supraleitenden Sprungtemperatur seines Materials zu halten, ist der Stromträger 2 ist über seine gesamte Länge in einem Kryostaten 4 aufgenommen, in dem der supraleitende Stromträger 2 in Kontakt mit Kühlmedium aus dem Vorratsbehälter 3 gebracht wird. Der supraleitende Stromträger 2 ist mit normalleitenden Stromzuführungen 5, 6, beispielsweise Stromträger oder massiven Zuführungen aus einem gut leitenden Material, beispielsweise Kupfer, elektrisch verbunden.

Zum Transport des Kühlmediums vom Vorratsbehälter 3 zum Kryostaten 4 dient eine Kühlmediumsleitung 8, die mit einem Kühlmediumseingang 9 des Kryostaten 4 strömungsverbunden ist. In der Kühlmediumsleitung 8 ist eine Einrichtung 10 zum Unterkühlen des durch die Kühlmediumsleitung 8 geführten verflüssigten Gases vorgesehen. Mittels einer Sperrarmatur 11 kann die Durchleitung von verflüssigtem Gas durch die Kühlmediumsleitung 8 unterbrochen oder geöffnet werden.

Bei der Einrichtung 10 handelt es sich insbesondere um einen Unterkühler, der nach folgendem Prinzip arbeitet: Von der Kühlmediumsleitung 8 zweigt eine Ausleitung 12 ab, durch die Kühlmedium aus dem Vorratsbehälter 3 abgeführt und in einem in der Einrichtung 10 eingebauten Behälter 13 mit dem durch die Kühlmediumsleitung 8 geführten Medium in thermischen Kontakt gebracht wird. Mittels einer Sperrarmatur 14 kann das Medium im Behälter 13 strömungstechnisch von dem durch die Kühlmediumsleitung 8 geführten Kühlmedium getrennt werden. Im Behälter wird Kühlmedium bis zur Höhe eines Pegels 15 eingefüllt. Von der Gasphase oberhalb des Pegels 15 zweigt eine Ausleitung 17 für gasförmiges Kühlmedium ab, die entweder mit der Umgebungsatmosphäre oder mit einer hier nicht gezeigten Vakuumpumpe verbunden ist. Da beim Eintritt in die Wärmetauscher 10 das über die Kühlmediumsleitung 8 herangeführte Kühlmedium auf einem höheren Druck und damit auf einer höheren Temperatur vorliegt als das Kühlmedium im Behälter 13, wird das durch die Kühlmediumsleitung 8 geführte Medium durch den Wärmetausch auf eine Temperatur unterhalb seines Siedepunkts gebracht, also unterkühlt. Beispielsweise wird das anschließend dem Kühlmediumseingang 9 zugeführte Kühlmedium auf eine Temperatur gekühlt, die 5 K bis 10 K oder mehr unterhalb seines Siedepunktes liegt. Um die Temperatur des Kühlmediums in einem weiten Bereich einstellen zu können, ist es im Übrigen vorteilhaft, an die Ausleitung 17 eine hier nicht gezeigte Vakuumpumpe anzuschließen, mittels der der Druck des Kühlmediums in der Ausleitung 17, und damit dessen Temperatur im Behälter 13, weiter reduziert werden kann.

Im Betrieb der Vorrichtung 1 wird der supraleitende Stromträger 2 auf eine Temperatur unterhalb seiner supraleitenden Sprungtemperatur gekühlt. Anschließend wird ein Strom, bevorzugt Gleichstrom mit einer Stromstärke von beispielsweise 200000 A von einem hier nicht gezeigten Stromerzeuger über die Stromzuführung 5 in den supraleitenden Stromträger 2 zur Stromzuführung 6 geleitet und anschließend einem hier gleichfalls nicht gezeigten Verbraucher zugeführt.

Da es aufgrund der hohen Ströme in den normalleitenden Stromzuführungen 5, 6 zu einer erheblichen Wärmeentwicklung kommt, sind diese jeweils mit einem Wärmetauscher 18, 19 zum thermischen Kontakt mit einem Kühlmedium ausgerüstet. Als Kühlmedium kommt bei der Vorrichtung 1 Kühlmedium aus dem Vorratsbehälter 3 zum Einsatz. Während das Kühlmedium für den Wärmetauscher 18 über eine Zuleitung 21 direkt aus dem Vorratsbehälter 3 in den Wärmetauscher geführt wird und dort an einer hier nicht gezeigten Wärmetauscherfläche mit der Stromzuführung 5 in thermischen Kontakt kommt, wird der Wärmetauscher 19 von dem aus dem Kryostaten 4 an einem Kühlmediumsausgang 22 austretenden und über eine Leitung 23 zum Wärmetauscher 19 geführten Kühlmedium gekühlt. Da das Kühlmedium im Kryostat 4 im Betrieb des supraleitenden Stromträgers 2 nur wenig Wärme, überwiegend aufgrund eines Wärmeeintrags über die isolierenden Wände des Kryostaten 4, aufnimmt, ist das Kühlmedium auch in der Leitung 23 noch im flüssigen Zustand. Durch den Wärmekontakt mit den Stromzuführungen 5, 6 verdampft das kryogene Kältemedium zumindest teilweise und wird nach Durchlaufen durch die Wärmetauscher in die Umgebungsatmosphäre abgegeben oder einer weiteren Verwendung zugeführt.

Im Übrigen kann auch kaltes Gas aus der Ausleitung 17 zur Kühlung in einem der Wärmetauscher 18, 19, anstelle oder ergänzend zu dem über die Leitungen 21, 23 herangeführten Kühlmedium, eingesetzt werden. Bei nicht allzu langen supraleitenden Stromträgern 2 ist es zudem möglich, das aus dem Kryostaten 4 am Kühlmediumsausgang austretende Kühlmedium zum Kühlen beider Stromzuführungen 5, 6 einzusetzen. Die Leitung 23 kann darüber hinaus auch mit einer Zuleitung 24 ausgerüstet sein, über die bei Bedarf zusätzliches Kühlmedium aus dem Vorratsbehälter 3 oder einem weiteren Vorratsbehälter zugeführt und zur Kühlung der Stromzuführung 6 im Wärmetauscher 19 eingesetzt werden kann.

Die erfindungsgemäße Vorrichtung 1 ist insbesondere zur Kühlung langer supraleitender Stromträger 2 geeignet, bei denen eine Kreislaufführung des Kühlmediums aufgrund des hohen apparativen Aufwandes und/oder des unvermeidlichen Wärmeeintrags über die isolierenden Wände des Kryostaten 4 unwirtschaftlich wäre.

### Bezugszeichenliste

- 1.: Vorrichtung
- 2.: Supraleitender Stromträger
- 3.: Vorratsbehälter
- 4.: Kryostat
- 5.: Stromzuführung
- 6.: Stromzuführung
- 7.: -
- 8.: Kühlmediumsleitung
- 9.: Kühlmediumseingang
- 10.: Einrichtung zum Unterkühlen
- 11.: Sperrarmatur
- 12.: Ausleitung
- 13.: Behälter
- 14.: Sperrarmatur
- 15.: Pegel
- 16.: -
- 17.: Ausleitung
- 18.: Wärmetauscher
- 19.: Wärmetauscher
- 20.: -
- 21.: Zuleitung
- 22.: Kühlmediumsausgang
- 23.: Leitung
- 24.: Zuleitung

## Patentansprüche

1. Verfahren zum Kühlen eines in einem Kryostaten (4) aufgenommenen, mit zwei normalleitenden Stromzuführungen (5, 6) elektrisch verbundenen supraleitenden Stromträgers (2), bei dem ein Kühlmedium aus einem Vorratsbehälter (3) auf eine Temperatur unterhalb seiner Siedetemperatur unterkühlt und über einen Kühlmediumseingang (9) dem Kryostaten (4) zugeführt, mit dem supraleitenden Stromträger (2) in thermischen Kontakt gebracht und anschließend über einen Kühlmediumsausgang (22) des Kryostaten (4) abgeführt wird,
**dadurch gekennzeichnet,**
**dass** das Kühlmedium nach dem Durchlaufen des Kryostaten (4) mit wenigstens einer ersten der normalleitenden Stromzuführungen (5, 6) in Wärmekontakt gebracht wird.

2. Verfahren nach Anspruch 1, **dadurch gekennzeichnet, dass** das der Stromzuführung (5, 6) zugeführte Kühlmedium stromab zum Kryostaten (4) mit Kühlmedium aus dem Vorratsbehälter (3) oder einem weiteren Vorratsbehälter ergänzt wird.

3. Verfahren nach Anspruch 1 oder 2, **dadurch gekennzeichnet, dass** zur Kühlung der zweiten Stromzuführung (6, 4) Kühlmedium aus dem Vorratsbehälter (3) eingesetzt wird.

4. Verfahren nach einem der vorhergehenden Ansprüche, **dadurch gekennzeichnet, dass** zur Unterkühlung des Kühlmediums Kühlmedium aus dem Vorratsbehälter (3) in einem Behälter (13) mit einem Kühlmedium in indirekten Wärmekontakt gebracht wird, das bei einem geringeren Druck als der Druck im Vorratsbehälter (3) vorliegt und aus dem Behälter (13) abdampfendes Kühlmedium zur Kühlung einer Stromzuführung (5, 6) eingesetzt wird.

5. Verfahren nach einem der vorhergehenden Ansprüche, **dadurch gekennzeichnet, dass** zum Unterkühlen des Kühlmediums dem Vorratsbehälter (3) kontinuierlich oder in regelmäßigen Abständen kondensiertes Kühlmedium zugeführt wird, dessen Druck unmittelbar vor der Befüllung des Vorratsbehälters (3) niedriger als der Druck am Boden des Vorratsbehälters (3) ist.

6. Verfahren nach einem der vorhergehenden Ansprüche, **dadurch gekennzeichnet, dass** als Kühlmedium ein erstes Kühlmedium und zum Unterkühlen des ersten Kühlmediums ein mit diesem in Wärmekontakt stehendes zweites Kühlmedium zum Einsatz kommt, das auf einer niedrigeren Temperatur vorliegt.

7. Verfahren nach einem der vorhergehenden Ansprüche, **dadurch gekennzeichnet, dass** als erstes und/oder zweites Kühlmedium ein verflüssigtes Gas eingesetzt wird.

8. Verfahren nach einem der vorhergehenden Ansprüche, **dadurch gekennzeichnet, dass** die Menge an den Stromzuführungen (5, 6) zugeführten Kühlmedium in Abhängigkeit von der benötigten Kälteleistung geregelt wird.

9. Vorrichtung zur Durchführung des Verfahrens nach einem der vorhergehenden Ansprüche, mit einem supraleitenden Stromträger (2), der an seinen Enden mit jeweils einer normalleitenden Stromzuführung (5, 6) elektrisch verbunden und in einem einen Kühlmediumseingang (9) und einem Kühlmediumsausgang (22) aufweisenden Kryostaten (4) aufgenommen ist, wobei der Kühlmediumseingang (9) über eine Zuleitung (8) mit einem Vorratsbehälter (3) für ein kryogenes Kühlmedium strömungsverbunden ist, welcher Zuleitung (8) eine Einrichtung (10) zur Unterkühlung des Kühlmediums zugeordnet ist,
**dadurch gekennzeichnet,**
**dass** die normalleitenden Stromzuführungen (5, 6) zumindest an ihren an den supraleitende Stromträger (2) angrenzenden Abschnitten durch Wärmetauscher (18, 19) geführt sind, die jeweils einen Kühlmediumseingang und einen Kühlmediumsausgang aufweisen und der Kühlmediumseingang wenigstens einer der Wärmetauscher (18, 19) mit dem Kühlmediumsausgang (22) des Kryostaten strömungsverbunden ist.

## Claims

1. A method for cooling a superconducting current carrier (2) which is accommodated in a cryostat (4) and is electrically connected to two normally conducting power leads (5, 6), in which a cooling medium from a stock vessel (3) is supercooled to a temperature below its boiling point and fed via a cooling medium inlet (9) into the cryostat (4), brought into thermal contact with the superconducting current carrier (2) and subsequently discharged via a cooling medium outlet (22) from the cryostat (4),
**characterized in that**
the cooling medium which has passed through the cryostat (4) is brought into thermal contact with at least a first of the normally conducting power leads (5, 6).

2. The method as claimed in claim 1, **characterized in that** the cooling medium supplied to the power lead (5, 6) is supplemented downstream of the cryostat (4) with cooling medium from the stock vessel (3) or a further stock vessel.

3. The method as claimed in claim 1 or 2, **characterized in that** cooling medium from the stock vessel (3) is used for cooling the second power lead (6, 4).

4. The method as claimed in any of the preceding claims, **characterized in that** in order to supercool the cooling medium, cooling medium from the stock vessel (3) is brought into indirect thermal contact in a vessel (13) with a cooling medium which is present at a pressure lower than the pressure in the stock vessel (3) and cooling medium vaporizing from the vessel (13) is used for cooling a power lead {5, 6) .

5. The method as claimed in any of the preceding claims, **characterized in that** in order to supercool the cooling medium, condensed cooling medium whose pressure immediately before the stock vessel (3) is filled is lower than the pressure at the bottom of the stock vessel (3) is fed continuously or at regular intervals into the stock vessel (3).

6. The method as claimed in any of the preceding claims, **characterized in that** a first cooling medium and, for supercooling the first cooling medium, a second cooling medium which is present at a lower temperature and is in thermal contact with the first cooling medium is used as cooling medium.

7. The method as claimed in any of the preceding claims, **characterized in that** a liquified gas is used as first cooling medium and/or second cooling medium.

8. The method as claimed in any of the preceding claims, **characterized in that** the amount of cooling medium supplied to the power leads (5, 6) is regulated as a function of the refrigerating power required.

9. An apparatus for carrying out the method as claimed in any of the preceding claims, comprising a superconducting current carrier (2) which is electrically connected at its ends with in each case a normally conducting power lead (5, 6) and is accommodated in a cryostat (4) having a cooling medium inlet (9) and a cooling medium outlet (22), where the cooling medium inlet (9) is fluidically connected via a feed conduit (8) to a stock vessel (3) for a cryogenic cooling medium, which feed conduit (8) is assigned a device (10) for supercooling the cooling medium,
**characterized in that**
the normally conducting power leads (5, 6) are, at least at their sections adjoining the superconducting current carrier (2), passed through heat exchangers (18, 19) which each have a cooling medium inlet and a cooling medium outlet and the cooling medium inlet of at least one of the heat exchangers (18, 19) is fluidically connected to the cooling medium outlet (22) of the cryostat.

## Revendications

1. Procédé de refroidissement d'un porteur de courant supraconducteur (2), reçu dans un cryostat (4) et relié électriquement à deux alimentations en courant normalement conductrices (5, 6), procédé dans lequel un milieu réfrigérant provenant d'un réservoir (3) est refroidi à une température inférieure à son point d'ébullition et amené au cryostat (4) par une entrée de milieu réfrigérant (9), mis en contact thermique avec le porteur de courant supraconducteur (2) puis évacué par une sortie de milieu réfrigérant (22) du cryostat (4),
**caractérisé en ce que**
après avoir traversé le cryostat (4), le milieu réfrigérant est mis en contact thermique avec au moins une première des alimentations en courant normalement conductrices (5, 6).

2. Procédé selon la revendication 1, **caractérisé en ce que** le milieu réfrigérant amené à l'alimentation en courant (5, 5) est complété en aval du cryostat (4) par un milieu réfrigérant provenant du réservoir (3) ou d'un autre réservoir.

3. Procédé selon la revendication 1 ou 2, **caractérisé en ce que** le milieu réfrigérant provenant du réservoir (3) est utilisé pour refroidir la deuxième alimentation en courant (6, 4).

4. Procédé selon l'une des revendications précédentes, **caractérisé en ce que**, pour refroidir le milieu réfrigérant, un milieu réfrigérant provenant du réservoir (3) est mis en contact thermique indirect dans un récipient (13) avec un milieu réfrigérant qui est à une pression inférieure à la pression dans le réservoir (3) et le milieu réfrigérant s'évaporant du récipient (13) est utilisé pour refroidir une alimentation en courant (5, 6).

5. Procédé selon l'une des revendications précédentes, **caractérisé en ce que**, pour refroidir le milieu réfrigérant, le réservoir (3) est alimenté en milieu réfrigérant, condensé en continu ou à intervalles réguliers, dont la pression immédiatement avant le remplissage du réservoir (3) est inférieure à la pression au fond du réservoir (3).

6. Procédé selon l'une des revendications précédentes, **caractérisé en ce qu'**un premier milieu réfrigérant est utilisé comme milieu réfrigérant et un deuxième milieu réfrigérant, qui est en contact thermique avec le premier milieu réfrigérant et qui est à une température plus basse, est utilisé pour refroidir le premier milieu réfrigérant.

7. Procédé selon l'une des revendications précédentes, **caractérisé en ce qu'**un gaz liquéfié est utilisé comme premier et/ou deuxième milieu réfrigérant.

8. Procédé selon l'une des revendications précédentes, **caractérisé en ce que** la quantité de milieu réfrigérant amené aux alimentations en courant (5, 6) est régulée en fonction de la capacité de refroidissement requise.

9. Dispositif de mise en œuvre du procédé selon l'une des revendications précédentes, comprenant un porteur de courant supraconducteur (2) qui est relié électriquement à chacune de ses extrémités à une alimentation en courant normalement conductrice (5, 6) et est reçu dans un cryostat (4) comportant une entrée de milieu réfrigérant (9) et une sortie de milieu réfrigérant (22), l'entrée de milieu réfrigérant (9) étant reliée à un réservoir (3) destiné à un milieu réfrigérant cryogénique par le biais d'une conduite d'alimentation (8), conduite d'alimentation (8) à laquelle est associé un moyen (10) de refroidissement du milieu réfrigérant,
**caractérisé en ce que**
les alimentations en courant normalement conductrices (5, 6) sont guidées, au moins sur leurs portions adjacentes au porteur de courant supraconducteur (2), à travers des échangeurs de chaleur (18, 19) qui comportent chacun une entrée de milieu réfrigérant et une sortie de milieu réfrigérant, et l'entrée de milieu réfrigérant d'au moins un des échangeurs de chaleur (18, 19) est en communication fluidique avec la sortie de milieu réfrigérant (22) du cryostat.
